# NEW EUROPEAN PATENT SPECIFICATION

(11) **EP 3 273 431 B2**
(45) Date of publication and mention of the opposition decision: **14.09.2022**
(45) Mention of the grant of the patent: 20.11.2019
(21) Application number: 17180980.9
(22) Date of filing: 12.07.2017
(51) Int. Cl.: G09B 23/34, G09B 23/24

(54) **THREE-DIMENSIONALLY PRINTED INTERNAL FLESH AND ORGANS FOR CRASH TEST DUMMY**
DREIDIMENSIONAL GEDRUCKTES INNERES FLEISCH UND ORGANE FÜR CRASHTEST-PUPPE
ORGANES INTERNES IMPRIMÉS EN TROIS DIMENSIONS POUR MANNEQUIN POUR CRASH TEST

(30) Priority: 19.07.2016 US 201662363983 P; 17.10.2016 US 201662409259 P; 02.12.2016 US 201615368181
(43) Date of publication of application: 24.01.2018
(73) Proprietor: Humanetics Innovative Solutions, Inc., Plymouth, MI 48170 (US)
(72) Inventor: VARA, Thomas Matthew, Norwalk, OH Ohio 44857 (US); UBOM, Ime Victor, Southfield, MI Michigan 48075 (US); BEEBE, Michael Scott, Norwalk, OH Ohio 44857 (US)
(74) Representative: Manitz Finsterwald Patent- und Rechtsanwaltspartnerschaft mbB

(56) References cited:
- EP-A1- 2 692 509
- EP-A1- 3 179 465
- WO-A1-2014/095872
- WO-A1-2016/044602
- US-A- 5 526 707
- Zeszyty Naukowe ET AL: "Scientific Journals Overview and analysis of dummies used for crash tests", 22 Scientific Journals, 1 January 2013 (2013-01-01), pages 22-31, XP055224571, Retrieved from the Internet: URL:http://yadda.icm.edu.pl/yadda/element/ bwmeta1.element.baztech-ed5b7b87-f6bf-4c70 -82e1-0d2aab1220ed/c/Jaskiewicz_overview.p df [retrieved on 2017-02-13]
- F. RENGIER ET AL: "3D printing based on imaging data: review of medical applications", INTERNATIONAL JOURNAL OF COMPUTER ASSISTED RADIOLOGY AND SURGERY, vol. 5, no. 4, 15 May 2010 (2010-05-15), pages 335-341, XP055139721, ISSN: 1861-6410, DOI: 10.1007/s11548-010-0476-x
- US 62/264107, filing date 7 December 2015
- TH. J. HINTON et al.: "Three-dimensional printing of complex biological structures by freeform reversible embedding of suspended hydrogels", Sci. Adv. 2015, vol. 1, 23 October 2015 (2015-10-23), page e1500758, DOI: 10.1126/sciadv.1500758
- Supplemental Material for Three-dimensional printing of complex biological structures by freeform reversible embedding of suspended hydrogels, published 23 October 2015

## Description

### BACKGROUND OF THE INVENTION

### 1. Field of the Invention

The present invention relates generally to crash test dummies and, more particularly, to three-dimensionally printed internal flesh and organs for a crash test dummy.

### 2. Description of the Related Art

Automotive, aviation, and other vehicle manufacturers conduct a wide variety of collision testing to measure the effects of a collision on a vehicle and its occupants. Through collision testing, a vehicle manufacturer gains valuable information that can be used to improve the vehicle, authorities examine vehicles to submit type approval, and consumer organizations provide information on vehicle safety ratings to the public.

Collision testing often involves the use of anthropomorphic test devices, better known as "crash test dummies", to estimate a human's injury risk. The dummy must possess the general mechanical properties, dimensions, masses, joints, and joint stiffness of the humans of interest. In addition, they must possess sufficient mechanical impact response similitude and sensitivity to cause them to interact with the vehicle's interior in a human-like manner.

The crash test dummy typically includes a head assembly, spine assembly (including neck), rib cage or torso assembly, pelvis assembly, right and left arm assemblies, and right and left leg assemblies. Generally, the arm assembly has an upper arm assembly and a lower arm assembly. The upper arm assembly is typically connected to a shoulder assembly, which, in turn, is typically connected to the spine assembly.

To develop an organ or flesh of a crash test dummy, it is necessary to be able to create designs and materials to adjust for the various possible stiffness, which the human body can have in different regions or components. To adjust current crash test dummies, it has only been possible to do this by the changing out different material and adjusting as close as possible the material stiffness requirement.

Three-dimensional (3D) printers and rapid prototyping (RP) systems are currently used primarily to quickly produce objects and prototype parts from 3D computer-aided design (CAD) tools. Most RP systems use an additive, layer-by-layer approach to building parts by joining liquid, powder, or sheet materials to form physical objects. The data referenced in order to create the layers is generated from the CAD system using thin, horizontal cross-sections of a CAD model.

Further background information can be obtained from US 5526707, which discloses a crash test dummy including a fetal insert, and from EP 2692509, which discloses the use of 3D printing to produce a model of an internal organ such as for medical training.

Therefore, it is desirable to have a crash test dummy with internal organs during vehicle crash testing. It is also desirable to have a crash test dummy including internal organs below a diaphragm such as a liver, stomach, spleen, small intestine, and colon. It is further desirable to have a crash test dummy with internal organs that have been adjusted for different force versus deflection or stiffness properties. It is still further desirable to provide a crash test dummy with adjustable inner and outer core structures or materials for performance changes for each region of a crash test dummy. Thus, there is a need in the art for new internal organs having a three-dimensionally printed internal flesh and organs made by a three-dimensional printing process for a crash test dummy.

### SUMMARY OF THE INVENTION

Accordingly, the present invention provides a three-dimensional internal organ for a crash test dummy. The three-dimensional internal organ is made of at least an outer core configured to replicate an outer portion for the internal organ and an inner core having a plurality of defined and varied cell structures disposed in the outer core to replicate an internal portion of the internal organ, wherein the outer core and inner core are adjustable in structure and material to vary performance requirements for evaluation of potential abdominal injuries during vehicle crash testing.

The cell structures vary in at least one of structure, material and shape independently of one another.

A method of making a three-dimensional internal organ for a crash test dummy includes the steps of providing a three-dimensional printer and making a CAD model of the three-dimensional internal organ for the crash test dummy. The method also includes the steps of printing, by the three-dimensional printer, the three-dimensional internal organ made of at least an outer core configured to replicate an outer portion for the internal organ and an inner core having a plurality of defined and varied cell structures disposed in the outer core to replicate an internal portion of the internal organ, wherein the outer core and inner core are adjustable in structure and material to vary performance requirements for evaluation of potential abdominal injuries during vehicle crash testing.

In addition, the present invention provides a crash test dummy including a body and a spine assembly operatively attached to the body and a rib cage assembly operatively attached to the spine assembly. The crash test dummy also includes at least one three-dimensional internal organ disposed at least partially within the rib cage assembly. The at least one three-dimensional internal organ is made of at least an outer core configured to replicate an outer portion for the internal organ and an inner core having a plurality of defined and varied cell structures disposed in the outer core to replicate an internal portion of the internal organ, wherein the outer core and inner core are adjustable in structure and material to vary performance requirements for evaluation of potential abdominal injuries during vehicle crash testing.

One advantage of the present invention is that a three-dimensional internal organ is provided for a crash test dummy. Another advantage of the present invention is that the crash test dummy includes at least one three-dimensional internal organ that is made using a three-dimensional printing process for structures, shapes, and combination of materials that can be adjusted to varying performance requirements, shorten design cycles, and increase biofidelity of all crash test dummies in use today and in the future. Yet another advantage of the present invention is that the three-dimensional internal organ is made of an outer core and an inner core. Still another advantage of the present invention is that the three-dimensional internal organ includes defined and varied structures and materials. A further advantage of the present invention is that the three-dimensional internal organ may be constructed and/or adjusted for different force versus deflection properties. Yet a further advantage of the present invention is that a three-dimensional printing process is used to make internal organs more humanlike than ever before.

Other features and advantages of the present invention will be readily appreciated, as the same becomes better understood, after reading the subsequent description taken in conjunction with the accompanying drawings.

### BRIEF DESCRIPTION OF THE DRAWINGS

FIG. 1 is a perspective view of a crash test dummy with an internal organ assembly, according to one embodiment of the present invention.
FIG. 2 is an exploded view of the internal organ assembly and the crash test dummy of FIG. 1.
FIG. 3 is a perspective view of the internal organ assembly and the crash test dummy of FIG. 1 with a sternum, a muscle layer, and an organ sac removed.
FIG. 4A is an elevational view of one embodiment of a three-dimensional internal organ for the internal organ assembly and crash test dummy of FIG. 1.
FIG. 4B is an exploded perspective view of the three-dimensional internal organ of FIG. 4A.
FIG. 5 is a schematic view of one embodiment of a three-dimensional printing system for printing the three-dimensional internal organ of FIGS. 4A and 4B.
FIG. 6 is a flowchart of a method, not covered by the present invention, for three-dimensional printing of the three-dimensional internal organ of FIGS. 4A and 4B.

### DESCRIPTION OF THE PREFERRED EMBODIMENT(S)

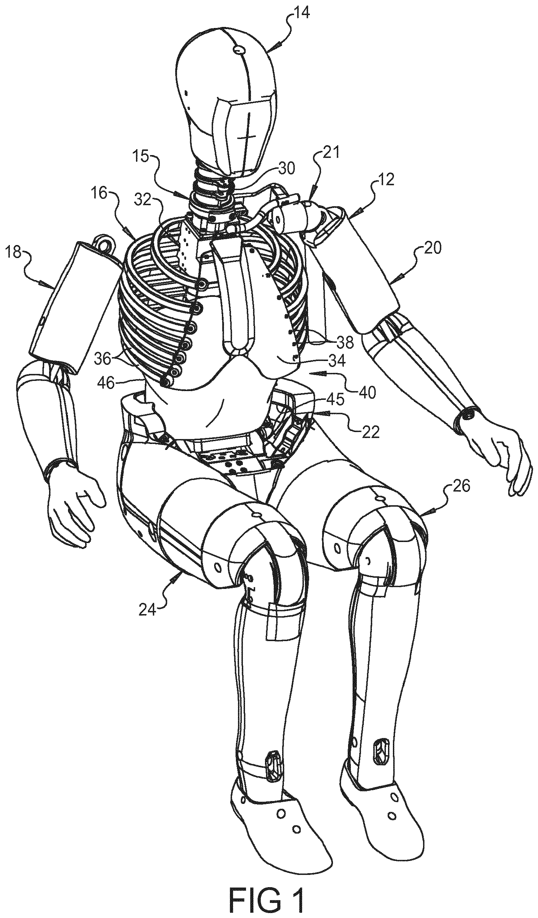

Referring to the drawings and in particular FIG. 1, one embodiment of a crash test dummy, according to the present invention, is generally indicated at 12. The crash test dummy 12 is of a fiftieth percentile (50%) male type and is illustrated in a sitting position. This crash test dummy 12 is used primarily to test the performance of vehicle interiors and restraint systems for adult front and rear seat occupants. The size and weight of the crash test dummy 12 are based on anthropometric studies, which are typically done separately by the following organizations, University of Michigan Transportation Research Institute (UMTRI), U.S. Military Anthropometry Survey (ANSUR), and Civilian American and European Surface Anthropometry Resource (CESAR). It should be appreciated that ranges of motions, centers of gravity, and segment masses simulate those of human subjects defined by the anthropometric data.

As illustrated in FIG. 1, the crash test dummy 12 includes a head assembly, generally indicated at 14. The crash test dummy 12 also includes a spine assembly, generally indicated at 15, having an upper end mounted to the head assembly 14 and a lower end extending into a torso area of the crash test dummy 12. It should be appreciated that the spine assembly 15 includes a neck 30 attached to the head assembly 14.

The torso area of the crash test dummy 12 includes a rib cage assembly, generally indicated at 16, connected to the spine assembly 15. The crash test dummy 12 also has a pair of arm assemblies including a right arm assembly, generally indicated at 18, and a left arm assembly, generally indicated at 20, which are attached to the crash test dummy 12 via a shoulder assembly, generally indicated at 21. It should be appreciated that a lower end of the spine assembly 15 is connected to a lumbar-thoracic adapter (not shown), which is connected to a lumbar to pelvic adapter (not shown).

As illustrated in the FIG. 1, the crash test dummy 12 includes a pelvis assembly, generally indicated at 22, connected to the pelvic adapter. The crash test dummy 12 includes a right leg assembly 24 and a left leg assembly 26, which are attached to the pelvis assembly 22. It should be appreciated that various components of the crash test dummy 12 may be covered in a polyvinyl skin such as a flesh and skin assembly for biofidelity of the crash test dummy 12.

The spine assembly 15 includes a spine box 32 connected to the neck 30. As mentioned above, the neck 30 is connected to the head assembly 14. The neck 30 has a lower end connected to the spine box 32 by a suitable attachment such as one or more fasteners (not shown) to the spine box 32. The spine box 32 is connected to the lumbar-thoracic adapter by a suitable mechanism such as one or more fasteners (not shown). It should be appreciated that the fasteners may threadably engage apertures (not shown) in the spine box 32 to secure the neck 30 to the spine box 32 and the spine box 32 to the lumbar-thoracic adapter.

The rib cage assembly 16 includes a sternum 34 spaced forwardly from the spine box 32. The sternum 34 is generally inverted "V" shaped, but may be any suitable shape. The rib cage assembly 16 also includes one or more ribs 36 extending between the spine box 32 and sternum 34. The ribs 36 are generally arcuate in shape and generally rectangular in cross-sectional shape, but may be any suitable shape. The ribs 36 are vertically spaced along the spine box 32 and the sternum 34. The ribs 36 are connected to the spine box 32 and the sternum 34 by a suitable mechanism such as fasteners 38.

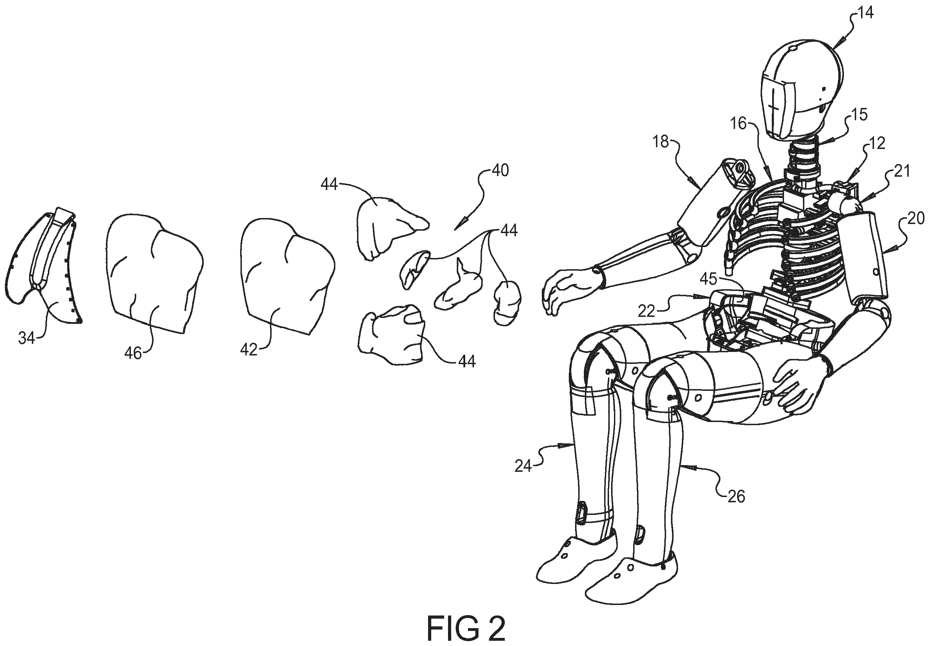

Referring to FIGS. 1 through 3, one embodiment of an internal organ assembly 40, according to the present invention, is shown for the crash test dummy 12. The internal organ assembly 40 is at least partially disposed in the rib cage assembly 16 and the pelvis assembly 22. The internal organ assembly 40 includes an abdominal or organ sac 42 having one or more three-dimensionally printed internal organs 44 to measure regional pressures for a crash test dummy 12 that provides for evaluation of potential abdominal injuries during vehicle crash testing. In the embodiment illustrated, the three-dimensionally printed internal organs 44 represent the liver, stomach, spleen, small intestine, and colon. The organ sac 42 is a continuous bag that contains the three-dimensionally printed internal organs 44 and holds the three-dimensionally printed internal organs 44 in place. The organ sac 42 is made of an elastomeric material and molded about the three-dimensionally printed internal organs 44. The organ sac 42 has a portion disposed in the rib cage assembly 16 between the sternum 34 and the spine box 32 and a portion disposed in a cavity 45 of the pelvis assembly 22.

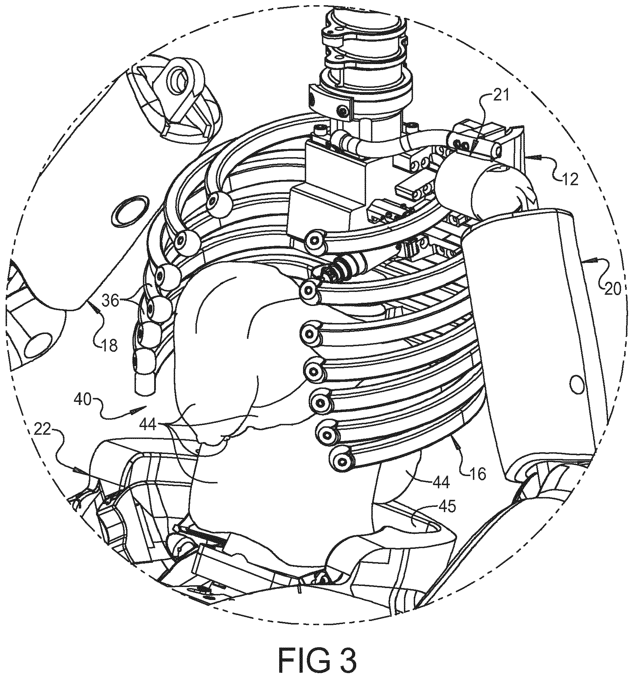

As shown in Figure 3, the three-dimensionally printed internal organs 44 are located in the crash test dummy 12 based on locations from radiology. The organ sac 42 and the sternum 34 are removed in Figure 3 to illustrate the position of the three-dimensionally printed internal organs 44. It should also be appreciated that the three-dimensionally printed internal organs 44 are disposed or contained within the organ sac 42. It should further be appreciated that the three-dimensionally printed internal organs 44 have sensors (not shown) to measure regional pressures for the crash test dummy 12 that communicate with an electronic controller (not shown) and provide for evaluation of potential abdominal injuries during vehicle crash testing.

The internal organ assembly 40 further includes an abdominal muscle layer 46 to hold the organ sac 42 in place. The muscle layer 46 is a layer covering the organ sac 42. The muscle layer 46 is made of an elastomeric material. It should be appreciated that the muscle layer 46 provides human-like interaction with vehicle restraints.

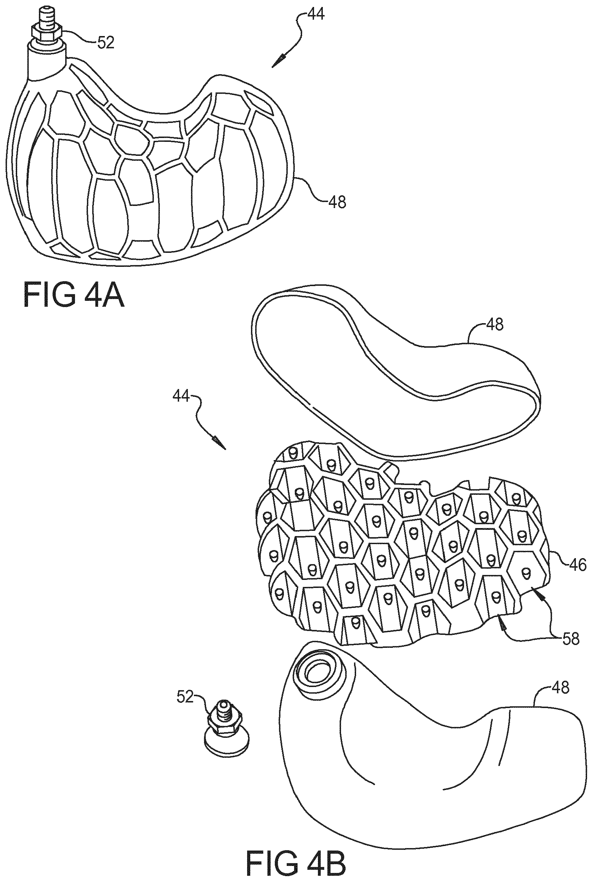

Referring to FIG. 4, one embodiment of the three-dimensionally printed internal organ 44 is shown. The three-dimensionally printed internal organ 44 is made of an inner core 46 configured to replicate an inner portion of the internal organ 44 and an outer core 48 configured to replicate an outer portion such as flesh of the internal organ 44. More specifically, the material for the inner core 46 and outer core 48 may be comprised of FDM Thermoplastics or Polyjet Photopolymers. The inner core 46 includes a plurality of defined and varied cell structures, generally indicated at 50. Said differently, the inner core 46 includes a plurality of cell structures 50 having predetermined cell structure geometry that may vary within the three-dimensionally printed internal organ 44. In a preferred embodiment, the cell structures 50 are generally hexagonal in shape, but may be any suitable shape. In the embodiment illustrated, the cell structures 50 may extend axially in one direction. In alternative embodiments, the cell structures 50 may extend axially in any direction. The cell structures 50 may be open or closed cells. The cell structures 50 can be adjusted by changing the structure, material, and shape independent of one another by using a three-dimensional printing process to be described. In one embodiment, the cell structures 50 vary across the material or from batch to batch to create a desired cell structure and adjust as necessary the stiffness. In the embodiment illustrated, the cell structures 50 are tessellated using hexagonal cell structures. The three-dimensionally printed internal organ 44 includes a connector 52 to allow pressure measurement of the internal organ 44. It should be appreciated that, since it is possible to define a shape of a cell structure 50, different force versus deflection properties inherent in cell structure geometry can be constructed within a single three-dimensionally printed internal organ 44 or between a plurality of three-dimensionally printed internal organs 44 of the crash test dummy 12. It should also be appreciated that the outer core 48 may include the cell structures 50 that may be different in structure, material, and shape from the inner core 46. It should further be appreciated that, by adapting a three-dimensional printing process for the design of the organs and flesh for the crash test dummy 12, the internal organs 44 can vary in structure, material, and shape all at the same time. It should further be appreciated that the three-dimensionally printed internal organ 44 also permits the use of a pressure measurement inside the cavity similar to the method used to measure the pressure inside a post-mortem human subject (PMHS) organ to evaluate for injury.

The three-dimensionally printed internal organ 44 may be produced by any three-dimensional printing process known in the art including, but not limited to Stereolithography (SLA), Digital Light Processing (DLP), Fused Deposition Modeling (FDM), Selective Laser Sintering (SLS), Selective Laser Melting (SLM), Electronic Beam Melting (EBM), and Laminated Object Manufacturing (LOM).

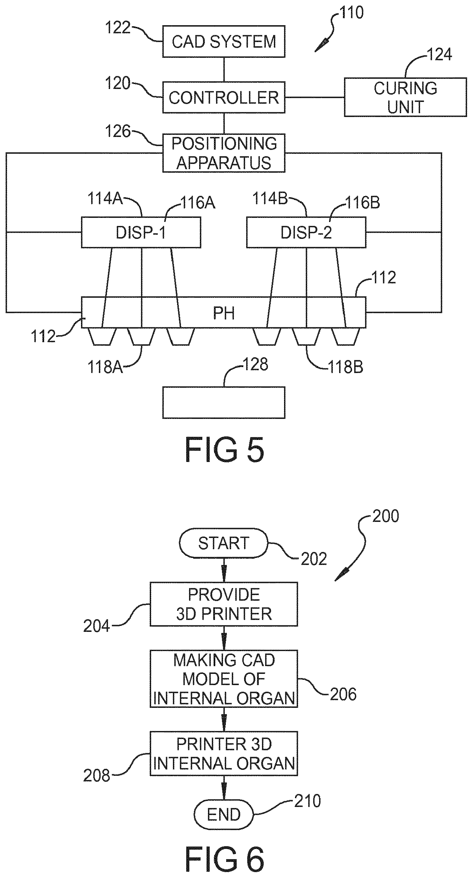

Referring to FIG. 5, one embodiment of a three-dimensional printer or printing system using fused deposition modeling is shown. The three-dimensional printer, generally designated 110, includes one or more printing heads 112, and at least two dispensers 114 and individually referenced 114a and 114b, containing printable materials, generally referenced 116 and individually referenced 116a and 116b, respectively. It should be appreciated that other components, and other sets of components, may be used.

The printing head 112 has a plurality of ink-jet type nozzles 118, through which printable materials 116a and 116b are jetted. In one embodiment, a first set of nozzles 118a are connected to the first dispenser 114a, and a second set of nozzles 118b are connected to the second dispenser 114b. Thus, first printable material 116a is jetted through the nozzles 118a, and the second printable material 116b is jetted through nozzles 118b. In another embodiment (not shown), the three-dimensional printing system 110 may include at least a first printing head and a second printing head. The first printing head is connected to the first dispenser 114a and is used to jet the first printable material 116a and the second printing head 112 is connected to the second dispenser 114b and is used to jet the second printable material 116b.

The three-dimensional printing system 110 further includes a controller 120, a Computer Aided Design (CAD) system 122, a curing unit 124, and optionally a positioning apparatus 126. The controller 120 is coupled to the CAD system 122, curing unit 124, positioning apparatus 126, printing head 112 and each of the dispensers 114. It should be appreciated that control may be effected by other units than shown, such as one or more separate units.

The three-dimensionally printed internal organ 44 is built in layers, the depth of each layer typically being controllable by selectively adjusting the output from each of the ink-jet nozzles 118.

By combining or mixing materials from each of the dispensers 114, wherein each dispenser 114 contains printable material having a different hardness, it is possible to adjust and control the hardness of a resultant material formed from a combination of the printable materials 116 and forming the three-dimensionally printed internal organ 44 being produced. Thus, by combining the first and second printable materials 116 being output from each of the dispensers 114, respectively, different parts of the three-dimensionally printed internal organ 44 having a different modulus of elasticity and consequently a different strength may be produced. Using three-dimensional printing, makes it possible to adjust and make an internal organ with defined and varied cell structures. It should be appreciated that such a three-dimensional printing system is disclosed in U.S. Patent No. 8,481,241 to Napadensky et al., the entire disclosure of which is hereby incorporated by reference.

Referring to FIG. 6, the present disclosure provides a method 200 of making the three-dimensionally printed internal organ 44 for the crash test dummy 12. The method 200 starts in bubble 202 and advances to block 204. In block 204, the method 200 includes the step of providing a three-dimensional printer or printing system 110. The method 200 advances to block 206 and includes the step of generating a CAD model of the three-dimensionally printed internal organ 44. In one embodiment, a CAD model of the three-dimensionally printed internal organ 44 was made to allow the three dimensional printer to print in one model. The method 200 advances to block 208 and includes the step of printing, by the three-dimensional printer or printing system 110, the three-dimensionally printed internal organ 44 is made of at least an outer core 48 configured to replicate an outer portion of the internal organ 44 and an inner core 46 having a plurality of defined and varied cell structures 50 disposed in the outer core 48 to replicate an internal portion of the internal organ 44, wherein the outer core 48 and inner core 46 are adjustable in structure and material to vary performance requirements for evaluation of potential abdominal injuries during vehicle crash testing.

Accordingly, the internal organ assembly 40 of the present invention allows the crash test dummy 12 to have three-dimensionally printed internal organs 44, according to the present invention, to measure regional pressures and measure potential injuries to a thoracic region of the dummy 12 during crash testing. In addition, the three-dimensionally printed internal organs 44 of the present invention represent a liver, stomach, spleen, small intestine, and colon. The three-dimensionally printed internal organs 44 of the present invention are made using a three-dimensional printing process for structures, shapes, and combination of materials that can be adjusted to varying performance requirements, shorten design cycles, and increase biofidelity of all crash test dummies in use today and in the future. The three-dimensionally printed internal organs 44 of the present invention are fitted into a molded organ sac 42 to contain the three-dimensionally printed internal organs 44 and hold the three-dimensionally printed internal organs 44 in place to mimic that of a human being. Further, the crash test dummy 12 with the three-dimensionally printed internal organs 44 of the present invention provides for evaluation of vehicle restraint system testing and is a surrogate to mimic potential abdominal injuries in vehicle restraint system testing for different modes of impact during vehicle crash tests and measures injury to internal organs during vehicle crash testing.

The present invention has been described in an illustrative manner. It is to be understood that the terminology, which has been used, is intended to be in the nature of words of description rather than of limitation.

Many modifications and variations of the present invention are possible in light of the above teachings. Therefore, the present invention may be practiced other than as specifically described.

## Claims

1. A crash test dummy (12) comprising:
a body;
a spine assembly (15) operatively attached to said body;
a rib cage assembly (16) operatively attached to said spine assembly (15);
at least one three-dimensionally printed internal organ (44) disposed at least partially within said rib cage assembly (16) made of at least an outer core (48) configured to replicate an outer portion for the internal organ (44) and an inner core (46) having a plurality of defined and varied cell structures (50) disposed in the outer core (48) to replicate an internal portion of the internal organ (44), wherein the outer core (48) and inner core (46) are adjustable in structure and material to vary performance requirements for evaluation of potential abdominal injuries during vehicle crash testing, the at least one three-dimensionally printed internal organ (44) including a connector (52) to allow pressure measurement of the internal organ (44); and
an organ sac (42) being a continuous bag that contains the at least one three-dimensionally printed internal organ (44) and holds the at least one three-dimensionally printed internal organ (44) in place.

## Patentansprüche

1. Crashtest-Dummy (12), umfassend:
einen Körper;
einen Wirbelsäulenaufbau (15), der funktional an dem Körper befestigt ist;
einen Rippenkäfigaufbau (16), der funktional an dem Wirbelsäulenaufbau (15) befestigt ist;
zumindest ein dreidimensional gedrucktes inneres Organ (44), das zumindest teilweise in dem Rippenkäfigaufbau (16) angeordnet ist und aus zumindest einem Außenkern (48), der derart konfiguriert ist, einen Außenabschnitt für das Innenorgan (44) zu replizieren, und einem Innenkern (46) besteht, der eine Mehrzahl definierter und variierter Zellenstrukturen (50) aufweist, die in dem Außenkern (48) angeordnet sind, um einen Innenabschnitt des inneren Organs (44) zu replizieren, wobei der Außenkern (48) und der Innenkern (46) hinsichtlich Struktur und Material einstellbar sind, um Leistungsanforderungen zur Bewertung potentieller Abdomenverletzungen während des Fahrzeugcrashtests zu variieren, wobei das zumindest eine dreidimensional gedruckte innere Organ (44) einen Verbinder (52) aufweist, um eine Druckmessung des inneren Organs (44) zu ermöglichen; und
einen Organbeutel (42), der eine kontinuierliche Tasche darstellt, die das zumindest eine dreidimensional gedruckte innere Organ (44) aufnimmt und das zumindest eine dreidimensional gedruckte innere Organ (44) an der Stelle hält.

## Revendications

1. Mannequin de test de collision (12) comprenant :
un corps ;
un ensemble spinal (15) fonctionnellement attaché audit corps ;
un ensemble formant cage thoracique (16) fonctionnellement attaché audit ensemble spinal (15) ;
au moins un organe interne imprimé en trois dimensions (44) disposé au moins partiellement à l'intérieur dudit ensemble formant cage thoracique (16) et fait d'au moins un noyau extérieur (48) configuré pour répliquer une portion extérieure pour l'organe interne (44) et un noyau intérieur (46) ayant une pluralité de structures cellulaires définies et variées (50) disposé dans le noyau extérieur (48) pour répliquer une portion interne de l'organe interne (44), dans lequel le noyau extérieur (48) et le noyau intérieur (46) sont ajustables quant à la structure et aux matériaux pour faire varier les exigences de performance pour évaluation des blessures abdominales potentielles pendant des tests de collision de véhicule, ledit au moins un organe interne imprimé en trois dimensions (44) incluant un connecteur (52) pour permettre un mesurage de pression de l'organe interne (44) ; et
une poche à organe (42) qui est un sac continu qui contient ledit au moins un organe interne imprimé en trois dimensions (44) et qui maintient en place ledit au moins un organe interne imprimé en trois dimensions (44).
